# EUROPÄISCHE PATENTSCHRIFT

(11) **EP 3 299 807 B1**
(45) Veröffentlichungstag und Bekanntmachung des Hinweises auf die Patenterteilung: **12.06.2019**
(21) Anmeldenummer: 17188728.4
(22) Anmeldetag: 31.08.2017
(51) Int. Cl.: G01N 30/68, C25B 9/10, G01N 30/60, C25B 1/10, G01N 30/02

(54) **VORRICHTUNG FÜR DEN NACHWEIS VON ORGANISCHEN VERBINDUNGEN**
DEVICE FOR DETECTING ORGANIC COMPOUNDS
DISPOSITIF DE DÉTECTION DE COMPOSÉS ORGANIQUES

(30) Priorität: 23.09.2016 DE 102016117998
(43) Veröffentlichungstag der Anmeldung: 28.03.2018
(73) Patentinhaber: Krohne Messtechnik GmbH, 47058 Duisburg (DE); Fraunhofer-Gesellschaft zur Förderung der angewandten Forschung e.V., 80686 München (DE)
(72) Erfinder: Ziesche, Steffen, 01159 Dresden (DE); Lenz, Christian, 01259 Dresden (DE); Deilmann, Michael, 45257 Essen (DE); Kuipers, Winfred, 45130 Essen (DE)
(74) Vertreter: Gesthuysen Patent- und Rechtsanwälte

(56) Entgegenhaltungen:
- EP-A1- 2 037 264
- EP-A1- 2 447 716
- EP-A1- 2 693 211
- EP-A1- 2 837 935
- EP-A2- 1 205 750
- EP-A2- 1 390 289
- EP-B1- 1 346 428
- DE-U1-202012 104 647
- US-A1- 2004 043 479
- US-B2- 9 389 207
- KUIPERS W ET AL: "Sensitivity of a planar micro-flame ionization detector", TALANTA, ELSEVIER, AMSTERDAM, NL, Bd. 82, Nr. 5, 15. Oktober 2010 (2010-10-15), Seiten 1674-1679, XP027338824, ISSN: 0039-9140 [gefunden am 2010-08-03]

## Beschreibung

Die vorliegende Erfindung betrifft eine Vorrichtung für den Nachweis von organischen Verbindungen, umfassend einen miniaturisierten Flammenionisationsdetektor mit einer Brennkammer für die Analyse eines Probegases, mit wenigstens einer Sauerstoffzuleitung zur Brennkammer und mit wenigstens einer Wasserstoffzuleitung zur Brennkammer und einen Elektrolyseur für die Erzeugung von Wasserstoff und Sauerstoff.

Für den Nachweis von organischen Verbindungen, insbesondere von kohlenwasserstoffhaltigen Verbindungen, ist der Einsatz von Flammenionisationsdetektoren aus dem Stand der Technik bekannt. Das Detektionsprinzip eines Flammenionisationsdetektors beruht darauf, die elektrische Leitfähigkeit einer Knallgasflamme zu messen, welche sich durch die Zufuhr von kohlenwasserstoffhaltigen Verbindungen erhöht. Im Detail wird das zu analysierende Probegas mit einem Brenngas, vorzugsweise Wasserstoff, gemischt und sowohl das Gasgemisch als auch ein Oxidationsmittel, vorzugsweise Sauerstoff oder Luft, werden einer Brennkammer zugeführt. In der Brennkammer wird das Probegas in einer Knallgasflamme, welche zwischen zwei Elektroden angeordnet ist, ionisiert und der Ionenstrom wird als Maß für die Konzentration der Kohlenwasserstoffe im Probegas gemessen. Dazu liegt an den Elektroden eine Gleichspannung an.

Besonders der mobile Einsatz von Flammenionisationsdetektoren, zum Beispiel zur Überprüfung der Dichtigkeit von Gasleitungen, sowie der Einsatz als Feldgerät sind in der Praxis von besonderer Bedeutung. Es ist daher bekannt, Flammenionisationsdetektoren in miniaturisierter Ausführung auszugestalten.

Darüber hinaus ist es ebenfalls aus dem Stand der Technik bekannt, zur Erzeugung von Wasserstoff als Brenngas bzw. von Sauerstoff als Oxidationsmittel die Elektrolyse von wässrigen Lösungen zu nutzen. In der Folge kann auf unhandliche Gasflaschen, welche insbesondere auch nur eine begrenzte Menge an Wasserstoff zur Verfügung stellen, verzichtet werden.

Die Druckschrift EP 2 447 716 A1 offenbart eine Vorrichtung für den Nachweis von organischen Verbindungen umfassend einen miniaturisierten Flammenionisationsdetektor, welcher aufgrund seiner geringen Abmessungen besonders vielfältig einsetzbar ist. Die Erzeugung von Wasserstoff und Sauerstoff erfolgt beispielsweise mittels Elektrolyse von wässrigen Lösungen. Nachteilig an der Kombination eines miniaturisierten Flammenionisationsdetektors und der Erzeugung von Wasserstoff bzw. Sauerstoff mittels Elektrolyse ist, dass in der wässrigen Lösung enthaltenen Elektrolyte, insbesondere Salze, sich in den miniaturisierten Kanälen des Flammenionisationsdetektors absetzen und diese durch Kristallisation verstopfen. Dies führt dazu, dass eine entsprechende Vorrichtung häufig gereinigt werden oder eine aufwendige Filterung durchgeführt werden muss, zudem kann ein einwandfreier Betrieb nicht gewährleistet werden.

Die Druckschrift US 9 389 207 B2 offenbart den Oberbegriff des Anspruchs 1.

Aufgabe der vorliegenden Erfindung ist es daher, eine Vorrichtung für den Nachweis von organischen Verbindungen anzugeben, die für den Einsatz als Feldgerät geeignet ist und die einen geringen Wartungsaufwand aufweist und eine hohe Zuverlässigkeit bereitstellt. Diese Aufgabe wird durch eine Vorrichtung gemäß Anspruch 1 gelöst.

Gemäß einer ersten Lehre der vorliegenden Erfindung wird die zuvor genannte Aufgabe durch eine eingangs genannte Vorrichtung dadurch gelöst, dass der Elektrolyseur als PEM-Elektrolyseur ausgestaltet ist, also als ein Elektrolyseur mit einer Protonen-Austausch-Membran (PEM = proton exchange membrane). Dabei besteht die Protonen-Austausch-Membran vorzugsweise aus einer ionenleitenden Membran definierter Dicke, beidseitig abgeschiedenen Elektroden und aus Gasdiffusionslagen, die über den Elektroden angeordnet sind.

Die Erzeugung von Wasserstoff und Sauerstoff mittels eines PEM-Elektrolyseurs passiert basierend auf der Spaltung von destilliertem Wasser zu Sauerstoff und zu positiven Wasserstoffionen. Die Wasserstoffionen diffundieren durch die Membran und kombinieren an der anderen Seite der Membran mit Elektronen zu Wasserstoff. Auf diese Weise entstehen Wasserstoff und Sauerstoff voneinander getrennt und stehen unmittelbar für die Weiterleitung an den Flammenionisationsdetektor zur Verfügung. Erfindungsgemäß wurde erkannt, dass die Herstellung von Wasserstoff bzw. Sauerstoff mittels PEM-Elektrolyse für den Nachweis mit einem miniaturisierten Flammenionisationsdetektor besonders vorteilhaft ist, da die Wasserstoff- bzw. Sauerstoffzuleitungen im Gegensatz zur Verwendung der herkömmlichen Elektrolyse nicht verstopfen. Demnach hat die erfindungsgemäße Vorrichtung den Vorteil, dass sie nur einen geringen Wartungsaufwand aufweist und gleichzeitig einen besonders zuverlässigen Betrieb gewährleistet.

Gemäß einer ersten bevorzugten Ausgestaltung sind die Sauerstoff- und die Wasserstoffzuleitung derart angeordnet, dass der Sauerstoff und der Wasserstoff einander entgegengesetzt in die Brennkammer eingeleitet werden. Eine solche Anordnung wird auch als Gegenstromanordnung bezeichnet. In dieser Anordnung heben sich die Impulse der in die Brennkammer eingeleiteten Gase im Staupunkt im Wesentlichen auf, wodurch die Knallgasflamme eine Kugelform annimmt. Diese ist besonders stabil, da die abgegebene Wärme aufgrund der minimalen Oberfläche einer kugelförmigen Flamme besonders gering ist. Die Ionisationseffizienz dieser Ausgestaltung ist damit besonders hoch. Zudem geht aufgrund der minimalen Fließgeschwindigkeit im Staupunkt zum einen wenig Wärme durch Konvektion verloren und zum anderen verweilt die zu analysierende Probe lange im ionisierenden Bereich zugunsten der Empfindlichkeit des Detektors.

Die Verwendung eines PEM-Elektrolyseurs in der zuvor beschriebenen Ausgestaltung ist darüber hinaus besonders vorteilhaft, da im Gegensatz zur herkömmlichen Elektrolyse die entstehenden Gase Wasserstoff und Sauerstoff für den Betrieb des miniaturisierten Flammenionisationsdetektor nicht getrennt werden müssen, sondern, wie zuvor dargelegt, bereits im Elektrolyseur getrennt voneinander entstehen. Insofern kann die zuvor beschriebene Ausgestaltung der erfindungsgemäßen Vorrichtung auf besonders einfache Weise betrieben werden.

Daneben ist es auch bevorzugt, wenn die Sauerstoff- und die Wasserstoffzuleitung in einem Winkel zwischen 90° und 180° zueinander in die Brennkammer münden. Eine besonders stabile Flammenform kann auch gemäß einer solchen Ausgestaltung erzeugt werden. Darüber hinaus ist es ebenfalls vorteilhaft, wenn mehr als eine Wasserstoff- und mehr als eine Sauerstoffzuleitung zur Brennkammer vorhanden sind, wobei vorzugsweise jeweils eine Sauerstoffund eine Wasserstoffzuleitung einander entgegengesetzt in die Brennkammer geleitet werden.

Gemäß einer weiteren Ausgestaltung ist wenigstens eine Probegaszuleitung vorhanden, welche in die Wasserstoffzuleitung mündet, sodass der Brennkammer ein Gasgemisch aus Wasserstoff und Probegas zuführbar ist.

Gemäß der Erfindung sind ein Wasserreservoir für den PEM-Elektrolyseur und eine Rückführung vorhanden, wobei die Rückführung die Brennkammer mit dem Wasserreservoir verbindet. Durch eine solche Rückführung kann beispielsweise das in der Brennkammer oder ggf. auf mit der Brennkammer verbundenen Ableitungswegen anfallende Kondensat in das Wasserreservoir zurückgeführt werden, wodurch dieses aufgefüllt wird. Diese Ausgestaltung hat den zusätzlichen Vorteil, dass auf ein externes Befüllen des Wasserreservoirs verzichtet werden kann, wodurch der mobile Einsatz einer Vorrichtung gemäß dieser Ausgestaltung weiter vereinfacht wird.

Gemäß einer weiteren bevorzugten Ausgestaltung sind ein oder mehrere Sensoren vorhanden, die die Zuverlässigkeit einer erfindungsgemäßen Vorrichtung weiter verbessern und die Betriebssicherheit erhöhen. Besonders bevorzugt ist in der Sauerstoff- und/oder der Wasserstoffzuleitung wenigstens ein Strömungssensor vorhanden. Diese Ausgestaltung hat den Vorteil, dass der in die Brennkammer eingeleitete Strom an Wasserstoff bzw. Sauerstoff gemessen und insofern kontrolliert in die Brennkammer eingeleitet werden kann. Insbesondere die Flammenform kann durch den kontrollierten Einlass des Wasserstoffs bzw. des Sauerstoffs beeinflusst werden.

Alternativ oder zusätzlich ist wenigstens ein Feuchtesensor in der Sauerstoff- und/oder der Wasserstoffzuleitung, der die Restfeuchtigkeit in der Sauerstoff- und/oder Wasserstoffzuleitung misst, vorhanden.

Alternativ oder zusätzlich ist wenigstens ein Drucksensor in der Sauerstoff- und/oder der Wasserstoffzuleitung vorhanden, wobei die Messung des Drucks innerhalb der Leitungen einen sicheren Betrieb der Vorrichtung gewährleistet.

Alternativ oder zusätzlich ist in der Sauerstoff- und/oder der Wasserstoffzuleitung wenigstens ein Temperatursensor zur Messung der Temperatur des Wasserstoffs und/oder des Gasgemisches aus Probegas und Wasserstoff und/oder des Sauerstoffs vorhanden. Zudem kann ebenfalls ein Temperatursensor in der Probegaszuleitung angeordnet sein. Vorzugsweise ist der Temperatursensor unmittelbar vor der Brennkammer angeordnet, wodurch die Temperatur, mit der die Gase in die Brennkammer geleitet werden, überwacht werden kann.

Alternativ oder zusätzlich ist ein weiterer Temperatursensor innerhalb der Brennkammer angeordnet, der die Temperatur der Brennkammer zur Erhöhung der Betriebssicherheit überwacht.

Alternativ oder zusätzlich ist wenigstens ein Füllstandssensor in dem Wasserreservoir des PEM-Elektrolyseurs vorhanden, der den Wasserstand im Wasserreservoir misst. Durch die Messung des Wasserfüllstandes kann vermieden werden, dass sich das Wasserreservoir vollständig entleert.

Gemäß einer weiteren Ausgestaltung ist wenigstens ein Heizelement für die Erwärmung des Wasserstoffs und/oder des Sauerstoffs und/oder des Probegases und/oder des Gasgemisches aus Wasserstoff und Probegas vorhanden. Die zuvor genannte Erwärmung eines Gases bzw. der Gase verbessert die Messeigenschaften des Flammenionisationsdetektors. Der Wasserstoff und/oder der Sauerstoff und/oder das Probegas und/oder das Gasgemisch aus Wasserstoff und Probegas wird bzw. werden vorzugsweise auf eine Temperatur von ungefähr 200°C erwärmt. Besonders bevorzugt ist das wenigstens eine Heizelement in wenigstens einer Zuleitung unmittelbar vor der Brennkammer angeordnet, wodurch eine gezielte Erwärmung des Gases bzw. der Gase vor dem Eintritt in die Brennkammer stattfindet.

Weiterhin ist es vorteilhaft, wenn eine Kühlfalle vorhanden ist, wobei die Kühlfalle im Bereich der Wasserstoffzuleitung und/oder der Sauerstoffzuleitung zwischen dem PEM-Elektrolyseur und der Brennkammer angeordnet ist. Eventuell vorhandenes Wasser bzw. eine Restfeuchtigkeit in der Wasserstoffzuleitung und/oder der Sauerstoffzuleitung kann so aus dem Wasserstoff und/oder dem Sauerstoff entfernt werden.

Gemäß einer weiteren bevorzugten Ausgestaltung ist der miniaturisierte Flammenionisationsdetektor mittels keramischer Mehrlagentechnologie hergestellt. Besonders bevorzugt ist der miniaturisierte Flammenionisationsdetektor als keramischer Monolith ausgebildet. Dies hat den Vorteil, dass bei Temperaturänderungen der Betriebstemperatur kein thermischer Stress in Folge von unterschiedlichen Ausdehnungsverhalten verschiedener Materialen entsteht. Zudem ist der als keramischer Monolith ausgestaltete miniaturisierte Flammenionisationsdetektor besonders resistent gegenüber verschiedenen Chemikalien. Insofern weist eine Vorrichtung, wobei der miniaturisierte Flammenionisationsdetektor als keramischer Monolith ausgestaltet ist, den Vorteil auf, dass die Messung von organischen Verbindungen auch unter schwierigen Bedingungen besonders zuverlässig ist.

Ebenfalls bevorzugt ist es, wenn der PEM-Elektrolyseur aus Halbschalen auf Basis der keramischen Mehrlagentechnologie oder auf Basis eines alternativen formgebenden Verfahren, wie beispielsweise Spritzgießen oder Extrusion, unter Verwendung von Kunststoff oder Keramik hergestellt ist. Die Verwendung weiterer geeigneter Materialien ist ebenfalls denkbar. Dabei ist ein Material geeignet, wenn das Material nicht mit den Elektrolysegasen Wasserstoff und Sauerstoff wechselwirkt. Die Verwendung von Keramik gegenüber beispielsweise Kunststoff ist aufgrund der besonders hohen Resistenz gegenüber äußeren Umwelteinflüssen wie Chemikalien oder Temperaturschwankungen besonders vorteilhaft. Zudem ist möglich wie nachfolgend beschrieben, eine Vorrichtung umfassend eine einstückige Ausgestaltung aus PEM-Elektrolyseur und miniaturisiertem Flammenionisationsdetektor vorzusehen.

Gemäß einer weiteren Ausgestaltung der erfindungsgemäßen Vorrichtung sind der PEM-Elektrolyseur und der Flammenionisationsdetektor aus keramischer Mehrlagentechnologie hergestellt, und der miniaturisierte Flammenionisationsdetektor und der PEM-Elektrolyseur sind als keramischer Monolith ausgestaltet. Diese Ausgestaltung hat zum einen den Vorteil, dass die Vorrichtung als einstückiges Bauteil ausgestaltet ist, wodurch der Aufbau und damit auch der Einsatz als Feldgerät einer Vorrichtung gemäß dieser Ausgestaltung vereinfacht wird. Zudem weist die zuvor beschriebene Ausgestaltung eine besonders hohe Zuverlässigkeit dadurch auf, dass der keramische Monolith besonders robust bei Temperaturänderungen und besonders resistent gegenüber Chemikalien ist.

Es ist besonders vorteilhaft, wenn der zuvor beschriebene keramische Monolith bestehend aus einem PEM-Elektrolyseur und einem miniaturisierten Flammenionisationsdetektor als SMD-Bauteil (SMD = surface-mounteddevice) ausgestaltet ist. Gemäß dieser Ausgestaltung sind elektrische und fluidische Anschlüsse auf der Unterseite der Vorrichtung angeordnet. In dieser Ausgestaltung kann die Vorrichtung besonders einfach in einem Schritt auf ein makroskopisches Substrat aufgebracht und angeschlossen werden.

Gemäß einer weiteren bevorzugten Ausgestaltung ist der PEM-Elektrolyseur mittels keramischer Mehrlagentechnologie hergestellt, und es ist eine Stromquelle für den Elektrolyseur und/oder eine Steuer- und Auswerteeinheit für den Füllstandsensor vorhanden, und die Stromquelle und/oder die Steuer- und Auswerteeinheit ist bzw. sind mit Hilfe von SMD-Bauteilen auf die Oberfläche des PEM-Elektrolyseurs aufgebracht. Da Mehrlagenkeramiken hauptsächlich als Leiterkarten genutzt werden, ist die zuvor beschriebene Verwendung von SMD-Bauteilen möglich. Diese Ausgestaltung hat den Vorteil einer maximalen Miniaturisierung sowie einer Vereinfachung des Aufbaus einer erfindungsgemäßen Vorrichtung.

Gemäß einer ebenfalls bevorzugten Ausgestaltung ist der miniaturisierte Flammenionisationsdetektor mittels keramischer Mehrlagentechnologie hergestellt, und es ist bzw. sind eine Spannungsversorgung für eine innerhalb der Brennkammer anliegenden Saugspannung und/oder eine Vorrichtung zur Messung eines Ionenstroms und/oder wenigstens eine Steuerund Auswerteeinheit für den Strömungssensor und/oder den Feuchtesensor und/oder den Drucksensor und/oder den Temperatursensor vorhanden, und die Spannungsversorgung und/oder die Vorrichtung zur Messung des Ionenstroms und oder die wenigstens eine Steuer- und Auswerteeinheit ist bzw. sind mit Hilfe von SMD-Bauteilen auf die Oberfläche des miniaturisierten Flammenionisationsdetektors aufgebracht.

Besonders bevorzugt ist es weiterhin, wenn ein miniaturisierter Gaschromatograph umfassend eine Trennsäule und einen Detektor, vorhanden ist, wobei der miniaturisierte Gaschromatograph derart in die erfindungsgemäße Vorrichtung integriert ist, dass die Trennsäule zwischen dem PEM-Elektrolyseur und dem miniaturisierten Flammenionisationsdetektor angeordnet ist und der miniaturisierte Flammenionisationsdetektor als Detektor des Gaschromatographen dient. Gemäß dieser Ausgestaltung wird vorzugsweise das Wasserstoffgas des Flammenionisationsdetektors als Trägergas des Gaschromatographen genutzt.

Gemäß einer vorteilhaften Ausgestaltung ist bzw. sind der PEM-Elektrolyseur und/oder der miniaturisierte Gaschromatograph und/oder der miniaturisierte Flammenionisationsdetektor auf Basis von keramischer Mehrlagentechnologie hergestellt.

Dabei umfasst diese Ausgestaltung sowohl Vorrichtungen, bei denen die Komponenten PEM-Elektrolyseur, Gaschromatograph und Flammenionisationsdetektor mittels desselben Verfahrens hergestellt sind, als auch Vorrichtungen, bei denen die zuvor genannten Komponenten mittels unterschiedlicher Verfahren und/oder unter Verwendung gleicher oder unterschiedlicher Materialien hergestellt sind.

Besonders bevorzugt sind der PEM-Elektrolyseur und der miniaturisierte Gaschromatograph und der miniaturisierte Flammenionisationsdetektor auf Basis von keramischer Mehrlagentechnologie hergestellt und die Vorrichtung umfassend den PEM-Elektrolyseur, den Gaschromatographen und den miniaturisierten Flammenionisationsdetektor ist als keramischer Monolith ausgestaltet.
Im Einzelnen gibt es nun eine Vielzahl von Möglichkeiten, die erfindungsgemäße Vorrichtung für den Nachweis von organischen Verbindungen auszugestalten. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigt
- Fig.1: ein erstes Ausführungsbeispiel eines PEM-Elektrolyseurs,
- Fig. 2: eine schematische Darstellung eines ersten Ausführungsbeispiels einer erfindungsgemäßen Vorrichtung,
- Fig. 3: ein zweites Ausführungsbeispiel einer erfindungsgemäßen Vorrichtung und
- Fig. 4: ein drittes Ausführungsbeispiel einer erfindungsgemäßen Vorrichtung.

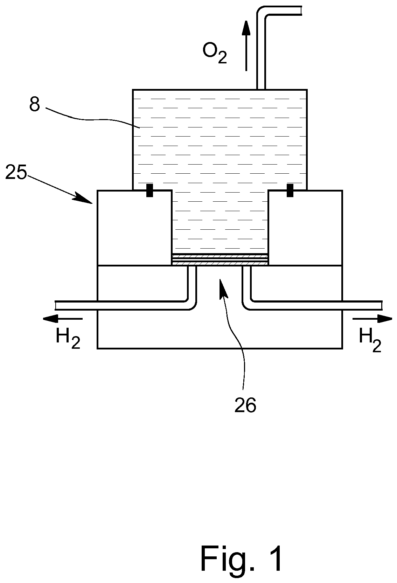

Fig. 1 zeigt ein erstes Ausführungsbeispiel eines PEM-Elektrolyseurs 7 für die Erzeugung von Wasserstoff und Sauerstoff. Der PEM-Elektrolyseur 7 besteht aus zwei strukturierten und funktionalisierten keramischen Halbschalen, zwischen denen die elektrochemisch wirksame Komponente 26 angeordnet ist. Diese besteht aus einer ionenleitenden Membran definierter Dicke, beidseitig abgeschiedenen Elektroden und aus den Gasdiffusionslagen, die über den Elektroden platziert sind. Dabei sind die zuvor genannten Komponenten derart ausgestaltet und angeordnet, dass der Zellinnenwiderstand minimal ist. Die keramischen Halbschalen sind derart strukturiert, dass sowohl anodenseitige Kontakt mit Wasser, als auch der anoden- und kathodenseitige Abtransport der Elektrolysegase möglich ist. Weiterhin sind die Halbschalen mit geeigneten elektrisch leitfähigen Metallisierungen versehen, durch die eine elektrische Kontaktierung der auf der Membran befindlichen Elektroden erreicht wird. Die Trennung der Elektrolysegase Wasserstoff und Sauerstoff wird durch eine ebenfalls zwischen den keramischen Halbschalen integrierte Dichtung erreicht. Die Elektrolyseeinheit wird in einem Gehäuse 25 verspannt, die eine definierte Verpressung der Einheit gewährleistet. Über das Gehäuse 25 können die Elektrolysegase abgeführt werden. Zudem ist ein Wasserreservoir 8 in das Gehäuse integriert.

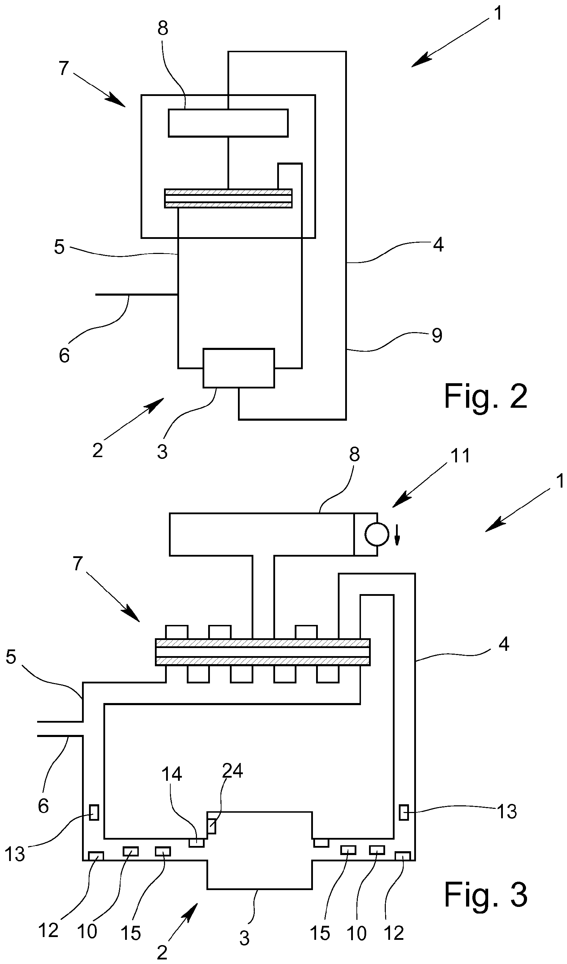

In Fig. 2 ist schematisch dargestellt ein erstes Ausführungsbeispiel einer erfindungsgemäßen Vorrichtung 1 für den Nachweis von organischen Verbindungen, insbesondere von kohlenwasserstoffhaltigen Verbindungen. Die dargestellte Vorrichtung 1 umfasst einen miniaturisierten Flammenionisationsdetektor 2 mit einer Brennkammer 3, in der das Probegas analysiert wird, mit einer Sauerstoffzuleitung 4 zur Brennkammer 3 und mit einer Wasserstoffzuleitung 5 zur Brennkammer 3. Zudem ist eine Probegaszuleitung 6 vorhanden, welche in die Wasserstoffzuleitung 5 mündet, so dass über die Wasserstoffzuleitung 5 ein Gasgemisch aus Wasserstoff und Probegas in die Brennkammer 3 eingeleitet werden kann. In der Brennkammer 3 wird im Betrieb der Vorrichtung 1 das Probegas in einer Knallgasflamme ionisiert und der Ionenstrom wird gemessen. Dabei ist der Ionenstrom über einen weiten Konzentrationsbereich proportional zum Kohlenwasserstoffgehalt des Probegases.

Für die Erzeugung von Wasserstoff und Sauerstoff ist ein PEM-Elektrolyseur 7 vorhanden. Die Verwendung eines PEM-Elektrolyseurs 7 ist insbesondere in Kombination mit einem miniaturisierten Flammenionisationsdetektor vorteilhaft, da die Erzeugung von Wasserstoff und Sauerstoff auf besonders einfache Weise erfolgt, wobei die Gase bereits bei ihrer Entstehung getrennt voneinander vorliegen und zur Verfügung stehen, sodass auf die Verwendung von unhandlichen Gasflaschen verzichtet werden kann. Darüber hinaus weist die Verwendung eines PEM-Elektrolyseurs 7 im Gegensatz zu herkömmlichen Elektrolyseuren überraschend den Vorteil auf, dass keine Elektrolyten, wie z. B. Salze, die miniaturisierten Zuleitungen verstopfen. Eine Reinigung der Vorrichtung und eine Filterung ist daher nicht notwendig. Insofern ist eine Vorrichtung 1 dargestellt, welche einen besonders geringen Wartungsaufwand bereitstellt und welche weiterhin eine besonders hohe Zuverlässigkeit aufweist. Wenn berücksichtigt wird, dass derartige miniaturisierte Vorrichtungen mit vertretbarem Aufwand möglicherweise überhaupt nicht wartbar oder reinigbar sind, dann hat die vorgestellte Vorrichtung eine sehr hohe Standzeit, bevor sie ausgetauscht werden muss.

Im dargestellten Ausführungsbeispiel sind die Sauerstoffzuleitung 4 und die Wasserstoffzuleitung 5 derart angeordnet, dass der Sauerstoff und der Wasserstoff einander entgegengesetzt in die Brennkammer 3 geleitet werden und direkt aufeinander zuströmen. Diese deshalb auch als Gegenstromanordnung bezeichnete Ausführung weist den Vorteil auf, dass die in der Brennkammer 3 im Betrieb der Vorrichtung 1 angeordnete Knallgasflamme eine besonders hohe Ionisationseffizienz bereitstellt. Durch das entgegengesetzte Einleiten des Wasserstoffs und des Sauerstoffs heben sich die Impulse der Gase im Staupunkt gegenseitig auf, sodass die Knallgasflamme eine Kugelform annimmt. Aufgrund der kleinen Oberfläche ist der Wärmeaustausch mit der Umgebung besonders gering, wodurch wiederum die Ionisationseffizienz erhöht wird. Zudem geht aufgrund der minimalen Fließgeschwindigkeit der Gase im Staupunkt zum einen wenig Wärme durch Konvektion verloren und zum anderen verweilt die zu analysierende Probe lange im ionisierenden Bereich zugunsten der Empfindlichkeit des Detektors.

Des Weiteren ist ein Wasserreservoir 8 vorhanden, in welchem das Wasser, das dem Elektrolyseur 7 zugeführt wird, im Betrieb der Vorrichtung 1 angeordnet ist. Zudem ist eine Rückführung 9 vorhanden, die die Brennkammer 3 mit dem Wasserreservoir 8 verbindet. Über die Rückführung 9 kann beispielsweise in der Brennkammer 3 oder auch erst in der Rückführung 9 anfallendes Kondensat in das Wasserreservoir 8 zurückgeführt werden, wodurch das Wasserreservoir 8 aufgefüllt wird. Durch den geschlossenen Kreislauf kann auf ein Nachfüllen des Wasserreservoirs 8 weitestgehend verzichtet werden, wodurch die Eignung der dargestellten Vorrichtung 1 insbesondere für den mobilen Einsatz erheblich verbessert wird.

Fig. 3 zeigt ein zweites Ausführungsbeispiel einer erfindungsgemäßen Vorrichtung 1 für den Nachweis von organischen Verbindungen. Auch die in Fig. 3 gezeigte Vorrichtung 1 weist einen miniaturisierten Flammenionisationsdetektor 2 mit einer Brennkammer 3 für die Analyse des Probegases, eine Sauerstoffzuleitung 4, eine Wasserstoffzuleitung 5 und eine Probegaszuleitung 6 auf, welche in die Wasserstoffzuleitung 5 mündet. Für die Erzeugung von Wasserstoff und Sauerstoff ist ein PEM-Elektrolyseur 7 vorhanden. In einem Wasserreservoir 8 ist im Betrieb der Vorrichtung 1 das dem PEM-Elektrolyseur 7 zuzuführende Wasser angeordnet.

Darüber hinaus weist die Vorrichtung 1 verschiedene Sensoren 10, 11, 12, 13, 14, 24 auf, welche die Zuverlässigkeit des Nachweises von organischen Verbindungen, insbesondere der Messung von kohlenwasserstoffhaltigen Verbindungen, verbessern und die Betriebssicherheit erhöhen. In der Sauerstoffzuleitung 4 und in der Wasserstoffzuleitung 5 ist jeweils ein Strömungssensor 10 angeordnet, welcher im Betrieb die Strömungsgeschwindigkeit des Wasserstoffs bzw. Sauerstoffs misst. Basierend auf dieser Information kann die Zuleitung der Gase in die Brennkammer 3 kontrolliert erfolgen. Vorzugsweise sind dazu hier nicht dargestellte Zuflussregler vorhanden.

Weiterhin weist die in Fig. 3 dargestellte Vorrichtung 1 in dem Wasserreservoir 8 einen Füllstandsensor 11 auf, welcher vorliegend als kapazitiver Füllstandsensor 11 ausgestaltet ist. Der Füllstandsensor 11 misst im Betrieb den Füllstand, des im Wasserreservoir 8 befindlichen Wassers. In der Folge kann vermieden werden, dass sich das Wasserreservoir 8 vollständig entleert, wodurch der Betrieb der Vorrichtung 1 unterbrochen werden müsste. Es kann daher sichergestellt werden, dass das Wasserreservoir 8 rechtzeitig, also vor seiner Entleerung wieder aufgefüllt wird, um einen dauerhaften Betrieb der Vorrichtung 1 zu garantieren.

Weiterhin sind in der Wasserstoffzuleitung 5 und in der Sauerstoffzuleitung 4 jeweils ein Feuchtesensor 12 vorgesehen, welcher im Betrieb die Feuchtigkeit des Sauerstoffgases bzw. Wasserstoffgases misst.

In der Sauerstoffzuleitung 4 und in der Wasserstoffzuleitung 5 sind jeweils Drucksensoren 13 angeordnet, welche im Betrieb der Vorrichtung 1 den in den Zuleitungen 5, 4 herrschenden Druck überwachen. Diese Drucksensoren 13 garantieren einen sicheren Betrieb der Vorrichtung 1.

Schließlich sind in den Zuleitungen 4 und 5 jeweils unmittelbar vor der Brennkammer 3 Temperatursensoren 14 angeordnet, die im Betrieb die Temperatur des Wasserstoffs bzw. des Sauerstoffs vor der Brennkammer 3 messen. Werden die Gase vor Einleiten in die Brennkammer 3 erwärmt, vorzugsweise auf ungefähr 200°C, verbessern sich die Messeigenschaften des miniaturisierten Flammenionisationsdetektors 2. Ein weiterer Temperatursensor 24 ist in der Brennkammer 3 angeordnet, der die Temperatur innerhalb der Brennkammer 3 überwacht.

Zur Erwärmung der in die Brennkammer 3 einzuleitenden Gase sind vor der Brennkammer 3 sowohl in der Wasserstoffzuleitung 5 als auch in der Sauerstoffzuleitung 4 Heizelemente 15 angeordnet, welche im Betrieb die in die Brennkammer 3 einzuleitenden Gase erwärmen.

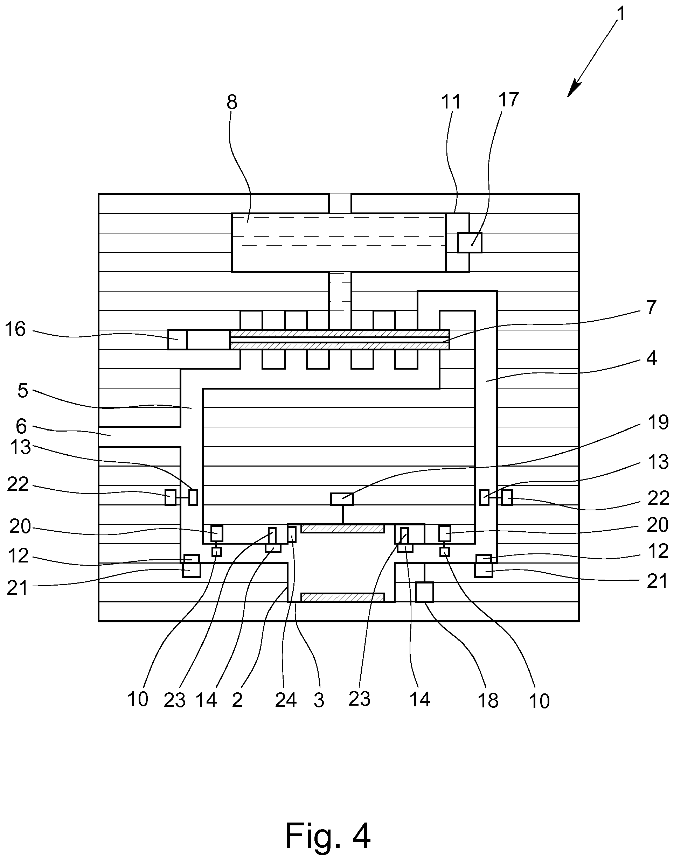

In Fig. 4 ist ein weiteres drittes Ausführungsbeispiel einer erfindungsgemäßen Vorrichtung 1 dargestellt. Wie die zuvor beschriebenen Ausführungsbeispiele weist das in Fig. 4 dargestellte Ausführungsbeispiel einen miniaturisierten Flammenionisationsdetektor 2 mit einer Brennkammer 3 für die Analyse des Probegases, eine Sauerstoffzuleitung 4 zur Brennkammer 3 und eine Wasserstoffzuleitung 5 zur Brennkammer 3 auf, wobei weiterhin eine Probegaszuleitung 6 vorgesehen ist, welche in die Wasserstoffzuleitung 5 mündet und über welche das Probegas in die Wasserstoffzuleitung 5 und damit als Gasgemisch in die Brennkammer 3 geleitet werden kann. Für die Erzeugung von Wasserstoff und Sauerstoff ist ein PEM-Elektrolyseur 7 vorgesehen. Zudem ist ein Wasserreservoir 8 zur Aufnahme und Bereitstellung des dem Elektrolyseur 7 zuzuführenden Wassers vorhanden.

Gemäß dem dargestellten Ausführungsbeispiel sind sowohl der miniaturisierte Flammenionisationsdetektor 2 als auch der PEM-Elektrolyseur 7 mittels keramischer Mehrlagentechnologie hergestellt. Vorliegend sind der miniaturisierte Flammenionisationsdetektor 2 und der PEM-Elektrolyseur 7 als keramischer Monolith ausgebildet. Dies hat den Vorteil, dass die dargestellte Vorrichtung 1 als ein Bauteil ausgestaltet ist, wodurch der Aufbau und damit auch der Einsatz im Feld der Vorrichtung 1 vereinfacht wird. Zudem weist das dargestellte Ausführungsbeispiel eine besonders hohe Zuverlässigkeit dadurch auf, dass der keramische Monolith besonders robust bei Temperaturänderungen und besonders resistent gegenüber Chemikalien ist.

Aufgrund der Ausgestaltung als keramischer Monolith ist es möglich und auch vorteilhaft SMD-Bauelemente zu verwenden. Vorliegend ist eine Stromquelle 16 für den Elektrolyseur vorhanden, die mit Hilfe eines SMD-Bauteils auf die Oberfläche des Elektrolyseurs aufgebracht ist. Darüber hinaus ist eine Steuer- und Auswerteeinheit 17 für den Füllstandsensor 11 vorhanden, welche ebenfalls mittels SMD-Bauteilen auf die Oberfläche des Elektrolyseurs aufgebracht ist.

Zudem sind realisiert eine Spannungsversorgung 18 für die in der Brennkammer 3 anliegende Saugspannung, eine Vorrichtung zur Messung des Ionenstroms 19 und jeweils eine Steuer- und Auswerteeinheit 20, 21, 22, 23 für jeden Strömungssensor 10, jeden Feuchtesensor 12, jeden Drucksensor 13 und jeden Temperatursensor 14.

Im Ergebnis wird damit eine Vorrichtung 1 für den Nachweis von organischen Verbindungen bereitgestellt, welche zum einen einen besonders geringen Wartungsaufwand, eine besonders hohe Zuverlässigkeit und eine besonders gute Eignung für den Einsatz als Feldgerät aufweist.

### Bezugszeichenliste

1 Vorrichtung für den Nachweis von organischen Verbindungen
2 miniaturisierter Flammenionisationsdetektor
3 Brennkammer
4 Sauerstoffzuleitung
5 Wasserstoffzuleitung
6 Probegaszuleitung
7 PEM-Elektrolyseur
8 Wasserreservoir
9 Rückführung
10 Strömungssensor
11 Füllstandsensor
12 Feuchtesensor
13 Drucksensor
14 Temperatursensor
15 Heizelement
16 Stromquelle für den Elektrolyseur
17 Steuer- und Auswerteeinheit für den Füllstandsensor
18 Spannungsversorgung für die in der Brennkammer anliegende Saugspannung
19 Vorrichtung zur Messung des Ionenestroms
20 Steuer- und Auswerteeinheit für den Strömungssensor
21 Steuer- und Auswerteeinheit für den Feuchtesensor
22 Steuer- und Auswerteeinheit für den Drucksensor
23 Steuer- und Auswerteeinheit für den Temperatursensor
24 Temperatursensor
25 Gehäuse
26 Elektrochemisch wirksame Komponente

## Patentansprüche

1. Vorrichtung (1) für den Nachweis von organischen Verbindungen, umfassend einen miniaturisierten Flammenionisationsdetektor (2) mit einer Brennkammer (3) für die Analyse eines Probegases, mit wenigstens einer Sauerstoffzuleitung (4) zur Brennkammer (3) und mit wenigstens einer Wasserstoffzuleitung (5) zur Brennkammer (3) und einen Elektrolyseur für die Erzeugung von Wasserstoff und Sauerstoff, wobei der Elektrolyseur als PEM-Elektrolyseur (7) ausgestaltet ist,
**dadurch gekennzeichnet,**
**dass** ein Wasserreservoir (8) für den PEM-Elektrolyseur (7) und eine Rückführung (9) vorhanden sind, wobei die Rückführung (9) die Brennkammer (3) mit dem Wasserreservoir (8) verbindet, wobei durch eine solche Rückführung das in der Brennkammer oder ggf. auf mit der Brennkammer verbundenen Ableitungswegen anfallende Kondensat in das Wasserreservoir zurückgeführt werden kann, wodurch dieses aufgefüllt wird.

2. Vorrichtung (1) nach Anspruch 1, **dadurch gekennzeichnet, dass** die Sauerstoffzuleitung (4) und die Wasserstoffzuleitung (5) derart angeordnet sind, dass der Sauerstoff und der Wasserstoff einander entgegengesetzt in die Brennkammer (3) eingeleitet werden.

3. Vorrichtung (1) nach Anspruch 1 oder 2, **dadurch gekennzeichnet, dass** wenigstens eine Probegaszuleitung (6) vorhanden ist, welche in die Wasserstoffzuleitung (5) mündet, sodass der Brennkammer (3) ein Gasgemisch aus Wasserstoff und Probegas zuführbar ist.

4. Vorrichtung (1) nach einem der Ansprüche 1 bis 3, **dadurch gekennzeichnet, dass** in der Sauerstoffzuleitung (4) und/oder in der Wasserstoffzuleitung (5) und/oder in der Brennkammer (3) wenigstens ein Strömungssensor (10) und/oder wenigstens ein Feuchtesensor (12) und/oder wenigstens ein Drucksensor (13) und/oder wenigstens ein Temperatursensor (14, 24) vorhanden ist bzw. sind und/oder wenigstens ein Füllstandsensor (11) in dem Wasserreservoir (8) vorhanden ist.

5. Vorrichtung (1) nach einem der Ansprüche 1 bis 4, **dadurch gekennzeichnet, dass** wenigstens ein Heizelement (15) für die Erwärmung des Wasserstoffs und/oder des Sauerstoffs und/oder des Probegases und/oder des Gasgemisches aus Wasserstoff und Probegas vorhanden ist.

6. Vorrichtung (1) nach einem der Ansprüche 1 bis 5, **dadurch gekennzeichnet, dass** eine Kühlfalle vorhanden ist, wobei die Kühlfalle im Bereich der Wasserstoffzuleitung (5) und/oder der Sauerstoffzuleitung (4) zwischen dem PEM-Elektrolyseur (7) und der Brennkammer (3) angeordnet ist.

7. Vorrichtung (1) nach einem der Ansprüche 1 bis 6, **dadurch gekennzeichnet, dass** der miniaturisierte Flammenionisationsdetektor (2) mittels keramischer Mehrlagentechnologie hergestellt ist.

8. Vorrichtung (1) nach einem der Ansprüche 1 bis 7, **dadurch gekennzeichnet, dass** der PEM-Elektrolyseur (7) aus Halbschalen auf Basis der keramischen Mehrlagentechnologie oder auf Basis eines alternativen formgebenden Verfahren, wie Spritzgießen oder Extrusion, unter Verwendung von Kunststoff oder Keramik hergestellt ist.

9. Vorrichtung (1) nach einem der Ansprüche 1 bis 8, wobei der PEM-Elektrolyseur (7) und der miniaturisierte Flammenionisationsdetektor (2) aus keramischer Mehrlagentechnologie hergestellt sind, **dadurch gekennzeichnet, dass** der miniaturisierte Flammenionisationsdetektor (2) und der PEM-Elektrolyseur (7) als keramischer Monolith ausgestaltet sind.

10. Vorrichtung (1) nach Anspruch 9, **dadurch gekennzeichnet, dass** der keramische Monolith bestehend aus dem PEM-Elektrolyseur (7) und dem miniaturisierten Flammenionisationsdetektor (2) als SMD-Bauteil ausgestaltet ist.

11. Vorrichtung (1) nach einem der Ansprüche 1 bis 10, wobei der PEM-Elektrolyseur (7) mittels keramischer Mehrlagentechnologie hergestellt ist, **dadurch gekennzeichnet, dass** eine Stromquelle (16) für den Elektrolyseur (7) und/oder eine Steuer- und Auswerteeinheit (17) für den Füllstandsensor (11) vorhanden ist, und die Stromquelle (16) und/oder die Steuerund Auswerteeinheit (17) mit Hilfe von SMD-Bauteilen auf die Oberfläche des PEM-Elektrolyseurs aufgebracht ist bzw. sind.

12. Vorrichtung (1) nach einem der Ansprüche 1 bis 11, wobei der miniaturisierte Flammenionisationsdetektor (2) mittels keramischer Mehrlagentechnologie hergestellt ist, **dadurch gekennzeichnet, dass** eine Spannungsversorgung (18) für eine innerhalb der Brennkammer (3) anliegende Saugspannung und/oder eine Vorrichtung (19) zur Messung eines Ionenstroms und/oder wenigstens eine Steuer- und Auswerteeinheit (20, 21, 22, 23) für den Strömungssensor (10) und/oder den Feuchtesensor (12) und/oder den Drucksensor (13) und/oder den Temperatursensor (14, 24) vorhanden ist bzw. sind und die Spannungsversorgung (18) und/oder die Vorrichtung (19) zur Messung des Ionenstroms und oder die wenigstens eine Steuerund Auswerteeinheit (17) mit Hilfe von SMD-Bauteilen auf die Oberfläche des miniaturisierten Flammenionisationsdetektors (2) aufgebracht ist bzw. sind.

13. Vorrichtung nach einem der Ansprüche 1 bis 12, **dadurch gekennzeichnet, dass** ein miniaturisierter Gaschromatograph umfassend eine Trennsäule und einen Detektor, vorhanden ist, wobei der miniaturisierte Gaschromatograph derart in die Vorrichtung integriert ist, dass die Trennsäule zwischen dem PEM-Elektrolyseur (7) und dem miniaturisierten Flammenionisationsdetektor (2) angeordnet ist und der miniaturisierte Flammenionisationsdetektor (2) als Detektor des Gaschromatographen dient.

14. Vorrichtung (1) nach Anspruch 13, **dadurch gekennzeichnet, dass** der PEM-Elektrolyseur (7) und/oder der miniaturisierte Gaschromatograph und/oder der miniaturisierte Flammenionisationsdetektor (2) auf Basis von keramischer Mehrlagentechnologie hergestellt ist bzw. sind.

15. Vorrichtung (1) nach einem der Ansprüche 13 oder 14, **dadurch gekennzeichnet, dass** der PEM-Elektrolyseur (7) und der miniaturisierte Gaschromatograph und der miniaturisierte Flammenionisationsdetektor (2) auf Basis von keramischer Mehrlagentechnologie hergestellt sind und dass die Vorrichtung umfassend den PEM-Elektrolyseur (7), den Gaschromatographen und den miniaturisierten Flammenionisationsdetektor (2) als keramischer Monolith ausgestaltet ist.

## Claims

1. Device (1) for the verification of organic compounds, comprising a miniaturized flame ionization detector (2) with a combustion chamber (3) for the analysis of a sample gas, having at least one oxygen feed line (4) to the combustion chamber (3), and having at least one hydrogen feed line (5) to the combustion chamber (3) and an electrolyzer for the generation of hydrogen and oxygen, wherein the electrolyzer is designed as a PEM electrolyzer (7)
**characterized in**
**that** a water reservoir (8) for the PEM electrolyzer (7) and a return line (9) are provided, wherein the return line (9) connects the combustion chamber (3) to the water reservoir (8), wherein due to such a return line, the condensation occurring in the combustion chamber or drainage lines connected to the combustion chamber is fed back into the water reservoir, thereby filling it.

2. Device (1) according to claim 1, **characterized in that** the oxygen feed line (4) and the hydrogen feed line (5) are arranged such that the oxygen and the hydrogen are introduced into the combustion chamber in opposite directions.

3. Device (1) according to claim 1 or 2, **characterized in that** at least one sample gas feed line (6) is provided, which opens into the hydrogen feed line (5) so that a gas mixture of hydrogen and sample gas can be fed to the combustion chamber (3).

4. Device (1) according to any one of claims 1 to 3, **characterized in that** at least one flow sensor (10) and/or at least one moisture sensor (12) and/or at least one pressure sensor (13) and/or at least one temperature sensor (14) is/are provided in the oxygen feed line (4) and/or in the hydrogen feed line (5) and/or in the combustion chamber (3), and/or at least one fill level sensor (11) is present in the water reservoir (8).

5. Device (1) according to any one of claims 1 to 4, **characterized in that** at least one heating element (15) is provided for heating the hydrogen and/or the oxygen and/or the sample gas and/or the gas mixture of hydrogen and sample gas.

6. Device (1) according to any one of claims 1 to 5, **characterized in that** a cooling trap is provided, wherein the cooling trap is arranged between the PEM electrolyzer (7) and the combustion chamber (3) in the region of the hydrogen feed line (5) and/or the oxygen feed line (4).

7. Device (1) according to any one of claims 1 to 6, **characterized in that** the miniaturized flame ionization detector (2) is produced by means of ceramic multi-layer technology.

8. Device (1) according to any one of claims 1 to 7, **characterized in that** the PEM electrolyzer (7) is made of half-shells on the basis of ceramic multi-layer technology or on the basis of an alternative shaping process, such as injection molding or extrusion using plastic or ceramics.

9. Device (1) according to any one of claims 1 to 8, wherein the PEM electrolyzer (7) and the miniaturized flame ionization detector (2) are made of ceramic multi-layer technology, **characterized in that** the miniaturized flame ionization detector (2) and the PEM electrolyzer (7) are designed as a ceramic monolith.

10. Device (1) according to claim 9, **characterized in that** the ceramic monolith consisting of the PEM electrolyzer (7) and the miniaturized flame ionization detector (2) is designed as an SMD component.

11. Device (1) according to any one of claims 1 to 10, wherein the PEM electrolyzer (7) is produced by ceramic multi-layer technology, **characterized in that** a current source (16) for the electrolyzer (7) and/or a control and evaluation unit (17) is provided for the fill level sensor (11) and the current source (16) and/or the control and evaluation unit (17) is/are applied to the surface of the PEM electrolyzer by means of SMD components.

12. Device (1) according to any one of claims 1 to 11, wherein the miniaturized flame ionization detector (2) is produced by ceramic multi-layer technology, **characterized in that** a voltage supply (18) for a suction voltage enclosed within the combustion chamber (3) and/or a device (19) for measuring the ion current and/or at least one control and evaluation unit (20, 21, 22, 23) is/are present for the flow sensor (10) and/or the moisture sensor (12) and/or the pressure sensor (13) and/or the temperature sensor (14, 24) and the voltage supply (18) and/or the device (19) for measuring the ion current and/or the at least one control and evaluation unit (17) is/are applied onto the surface of the miniaturized flame ionization detector (2) with the help of SMD components.

13. Device (1) according to any one of claims 1 to 12, **characterized in that** a miniaturized gas chromatograph comprising a separation column and a detector is present, wherein the miniaturized gas chromatograph is integrated into the device in such a manner that the separation column is arranged between the PEM electrolyzer (7) and the miniaturized flame ionization detector (2), and the miniaturized flame ionization detector (2) serves as a detector of the gas chromatograph.

14. Device (1) according to claim 13, **characterized in that** the PEM electrolyzer (7) and/or the miniaturized gas chromatograph and/or the miniaturized flame ionization detector (2) is/are produced on the basis of ceramic multi-layer technology.

15. Device (1) according to claim 13 or 14, **characterized in that** the PEM electrolyzer (7) and the miniaturized gas chromatograph and the miniaturized flame ionization detector (2) are produced on the basis of ceramic multi-layer technology, and that the device comprising the PEM electrolyzer (7), the gas chromatograph and the miniaturized flame ionization detector (2) is designed as a ceramic monolith.

## Revendications

1. Dispositif (1) pour le décèlement de composés organiques, comprenant un détecteur d'ionisation de flamme (2) miniaturisé doté d'une chambre de combustion (3) pour l'analyse d'un échantillon de gaz, comprenant au moins une conduite d'arrivée d'oxygène (4) vers la chambre de combustion (3) et comprenant au moins une conduite d'arrivée d'hydrogène (5) vers la chambre de combustion (3) et un électrolyseur pour la génération d'hydrogène et d'oxygène, l'électrolyseur étant réalisé sous la forme d'un électrolyseur PEM (7),
**caractérisé en ce**
**qu'**un réservoir à eau (8) pour l'électrolyseur PEM (7) et un recyclage (9) sont présents, le recyclage (9) reliant la chambre de combustion (3) avec le réservoir à eau (8), le condensat présent dans la chambre de combustion ou éventuellement produit sur les trajets d'évacuation reliés à la chambre de combustion pouvant être ramené par le biais d'un tel recyclage dans le réservoir à eau, celui-ci étant ainsi rempli.

2. Dispositif (1) selon la revendication 1, **caractérisé en ce que** la conduite d'arrivée d'oxygène (4) et la conduite d'arrivée d'hydrogène (5) sont disposées de telle sorte que l'oxygène et l'hydrogène sont introduits dans la chambre de combustion (3) à l'opposé l'un de l'autre.

3. Dispositif (1) selon la revendication 1 ou 2, **caractérisé en ce qu'**au moins une conduite d'arrivée d'échantillon de gaz (6) est présente, laquelle débouche dans la conduite d'arrivée d'hydrogène (5) de sorte qu'un mélange d'hydrogène et d'échantillon de gaz peut être acheminé à la chambre de combustion (3).

4. Dispositif (1) selon l'une des revendications 1 à 3, **caractérisé en ce qu'**au moins un capteur de débit (10) et/ou au moins un capteur d'humidité (12) et/ou au moins un capteur de pression (13) et/ou au moins une sonde de température (14, 24) se trouve(nt) dans la conduite d'arrivée d'oxygène (4) et/ou dans la conduite d'arrivée d'hydrogène (5) et/ou dans la chambre de combustion (3) et/ou au moins un capteur de niveau (11) se trouve dans le réservoir à eau (8).

5. Dispositif (1) selon l'une des revendications 1 à 4, **caractérisé en ce qu'**au moins un élément chauffant (15) destiné au réchauffage de l'hydrogène et/ou de l'oxygène et/ou de l'échantillon de gaz et/ou du mélange gazeux d'hydrogène et d'échantillon de gaz est présent.

6. Dispositif (1) selon l'une des revendications 1 à 5, **caractérisé en ce qu'**un piège de refroidissement est présent, le piège de refroidissement étant disposé dans la zone de la conduite d'arrivée d'hydrogène (5) et/ou de la conduite d'arrivée d'oxygène (4) entre l'électrolyseur PEM (7) et la chambre de combustion (3).

7. Dispositif (1) selon l'une des revendications 1 à 6, **caractérisé en ce que** le détecteur d'ionisation de flamme (2) miniaturisé est fabriqué au moyen d'une technologie multicouche céramique.

8. Dispositif (1) selon l'une des revendications 1 à 7, **caractérisé en ce que** l'électrolyseur PEM (7) est fabriqué à partir de semi-coques à base de la technologie multicouche céramique ou à base d'un procédé de façonnage alternatif, comme le moulage par injection ou l'extrusion, en utilisant une matière plastique ou de la céramique.

9. Dispositif (1) selon l'une des revendications 1 à 8, l'électrolyseur PEM (7) et le détecteur d'ionisation de flamme (2) miniaturisé étant fabriqués à partir d'une technologie multicouche céramique, **caractérisé en ce que** le détecteur d'ionisation de flamme (2) miniaturisé et l'électrolyseur PEM (7) sont réalisés sous la forme d'un monolithe en céramique.

10. Dispositif (1) selon la revendication 9, **caractérisé en ce que** le monolithe en céramique constitué de l'électrolyseur PEM (7) et du détecteur d'ionisation de flamme (2) miniaturisé est réalisé sous la forme d'un composant CMS.

11. Dispositif (1) selon l'une des revendications 1 à 10, l'électrolyseur PEM (7) étant fabriqué au moyen d'une technologie multicouche céramique, **caractérisé en ce qu'**une source de courant (16) pour l'électrolyseur (7) et/ou une unité de commande et d'interprétation (17) pour le capteur de niveau (11) sont présentes, et la source de courant (16) et/ou l'unité de commande et d'interprétation (17) sont appliquées sur la surface de l'électrolyseur PEM à l'aide de composants CMS.

12. Dispositif (1) selon l'une des revendications 1 à 11, le détecteur d'ionisation de flamme (2) miniaturisé étant fabriqué au moyen d'une technologie multicouche céramique, **caractérisé en ce qu'**une alimentation électrique (18) pour une tension d'aspiration appliquée à l'intérieur de la chambre de combustion (3) et/ou un dispositif (19) servant à mesurer un courant ionique et/ou au moins une unité de commande et d'interprétation (20, 21, 22, 23) pour le capteur de débit (10) et/ou le capteur d'humidité (12) et/ou le capteur de pression (13) et/ou la sonde de température (14, 24) sont présents et l'alimentation électrique (18) et/ou le dispositif (19) servant à mesurer le courant ionique et/ou l'au moins une unité de commande et d'interprétation (17) étant appliqués sur la surface du détecteur d'ionisation de flamme (2) miniaturisé à l'aide de composants CMS.

13. Dispositif (1) selon l'une des revendications 1 à 12, **caractérisé en ce qu'**un chromatographe en phase gazeuse miniaturisé, comprenant une colonne de séparation et un détecteur, est présent, le chromatographe en phase gazeuse miniaturisé étant intégré dans le dispositif de telle sorte que la colonne de séparation est disposée entre l'électrolyseur PEM (7) et le détecteur d'ionisation de flamme (2) miniaturisé et le détecteur d'ionisation de flamme (2) miniaturisé sert de détecteur du chromatographe en phase gazeuse.

14. Dispositif (1) selon la revendication 13, **caractérisé en ce que** l'électrolyseur PEM (7) et/ou le détecteur d'ionisation de flamme (2) miniaturisé sont fabriqués à base d'une technologie multicouche céramique.

15. Dispositif (1) selon l'une des revendications 13 ou 14, **caractérisé en ce que** l'électrolyseur PEM (7) et le chromatographe en phase gazeuse miniaturisé et le détecteur d'ionisation de flamme (2) miniaturisé sont fabriqués à base d'une technologie multicouche céramique et **en ce que** le dispositif comprenant l'électrolyseur PEM (7), le chromatographe en phase gazeuse miniaturisé et le détecteur d'ionisation de flamme (2) miniaturisé est réalisé sous la forme d'un monolithe en céramique.
